# EUROPEAN PATENT APPLICATION

(11) **EP 1 575 273 A1**
(43) Date of publication of application: **14.09.2005**
(21) Application number: 05101483.5
(22) Date of filing: 25.02.2005
(51) Int. Cl.: H04N 5/225, G03B 19/07, G03B 17/02

(54) **Duocam and method of assembly thereof**

(30) Priority: 10.03.2004 KR 2004016194
(71) Applicant: SAMSUNG ELECTRONICS CO., LTD., Gyeonggi-Do 442-742 (KR)
(72) Inventor: Lee, Chang-hee, Yeongtong-dong, Yeongtong-gu Gyeonggi-do (KR); Ahn, Kyoung-jin, Yeongtong-dong, Yeongtong-gu Gyeonggi-do (KR)
(74) Representative: Geary, Stuart Lloyd

(57) **Abstract**

An image photographing apparatus includes a deck assembly having a deck unit, a main board, and a first camera unit. A first exterior assembly has an opening corresponding to the deck unit, and is connected to one side of the deck assembly. A deck cover assembly is connected to the deck unit to open or close the opening of the first exterior assembly. A second exterior assembly is mounted with a second camera unit and a first display unit, and encompasses the other side of the deck assembly. A rear assembly is connected to the deck assembly to cover the rear side of the deck assembly. A front assembly covers the front side of the deck assembly. An upper assembly is connected to a second display unit and covers the upper portion of the deck assembly.

## Description

The present invention relates a camera system, and a method of manufacturing thereof, the camera system having a plurality of image capture units, the camera system comprising a recording media deck, a first and second image capture unit, a main circuit board and a housing.

A digital still camera (DSC) converts an image that is captured by a lens into a digital signal which is stored on a recording medium, such as a hard disk or a memory card. The captured (photographed) image is not, therefore, recorded on a film but is stored on the recording medium. Accordingly, the image can be input directly onto a personal computer without having to be scanned. The DSC is compatible with most personal computers allowing anyone to easily edit and modify the image. Also, the photographed image may be passed from one computer to another.

The DSC includes a lens, a memory unit, a signal modulation unit, and a display. However, because of recording medium having a small storage capacity, the DSC is primarily used for photographing still images. However, the DSC is capable of photographing and storing moving images although not for an extended period of time. Usually to photograph moving images, a device for recording and playing sound is required. The DSC is not typically equipped with such a device, which means that it is rather inadequate for photographing moving images and for storing and reproducing the stored moving images. To resolve these problems, a recording and reproducing device, such as a camcorder, which is capable of recording and reproducing moving images and sound stored in the recording medium (for example a magnetic tape), is also used.

The camcorder includes a lens, a signal conversion unit, a deck for recording and playback of photographed images, and a display. A magnetic cassette tape is generally used as the recording medium for the camcorder. The cassette tape is mounted in the deck and may record moving images for about an hour. Further, the camcorder includes a microphone and a speaker. The camcorder is usually also capable of photographing still images. However, since the picture quality of the still images is relatively poor compared with that of the DSC, the camcorder is primarily used for photographing moving images. Moreover, compared to the DSC, the camcorder is more complicated and has more functions, thereby generally being more bulky and expensive.

So far customers have had to separately purchase both a DSC and a camcorder to record and reproduce quality still and moving images, which is expensive. In addition, carrying two products and learning how to operate each product is inconvenient to most customers.

As an attempt to solve the above problems, a digital still camera/camcorder, or simply a dual cam system, is provided in which the DSC's function and the camcorder's function for photographing video images are combined into one product. The user can selectively choose which one to use according to circumstances. However, since two different products with different functions are combined in one system, the dual cam is even more bulky and has a very complicated structure. Therefore, there is a need to develop an image photographing apparatus having a simpler structure that is easy to manufacture and assemble.

Accordingly, it is a primary object of the present invention to provide an image photographing apparatus and an assembly method thereof in which the assembly of the image photographing apparatus is easy and straightforward.

The present invention relates to a method of manufacturing a camera system having a plurality of image capture units, the camera system comprising a recording media deck, a first and second image capture unit, a main circuit board and a housing.

A method according to the present invention is characterised by the main circuit board and the first image capture unit being fixed to the deck to form a core unit before the core unit is enclosed in the housing.

The present invention also relates to a camera system comprising a deck, a first and second image capture unit, a main circuit board and a housing.

A camera system according to the present invention is characterised in that the main circuit board, the first image capture unit and the deck are fixed together as a core unit whose unity is independent of the housing.

An embodiment of the present invention will now be described, by way of example only, and with reference to the accompanying Figures, in which:
Figure 1 is an exploded perspective view of an image photographing apparatus in accordance with a preferred embodiment of the present invention;
Figure 2 is a perspective view of a rear deck assembly (a rear assembly and a deck assembly connected together) shown in Figure 1;
Figure 3 is a perspective view of a first exterior assembly connected to the rear deck assembly of Figure 2;
Figure 4 is a perspective view of a deck cover assembly added to the assembly of Figure 3;
Figure 5 is a perspective view of a deck cover assembly connected to the assembly of Figure 4;
Figure 6 is a perspective view of a second exterior assembly connected to an upper assembly of Figure 1;
Figure 7 is an exploded perspective view of connecting a first module of Figure 5 to a second module of Figure 6;
Figure 8 is a perspective view of assembled first and second modules of Figure 7; and
Figure 9 is a perspective view of a front assembly connected to the assembly of Figure 8.

Throughout the drawings, like reference numerals will be understood to refer to like parts, components and structures. Known functions or constructions are not described in detail for brevity.

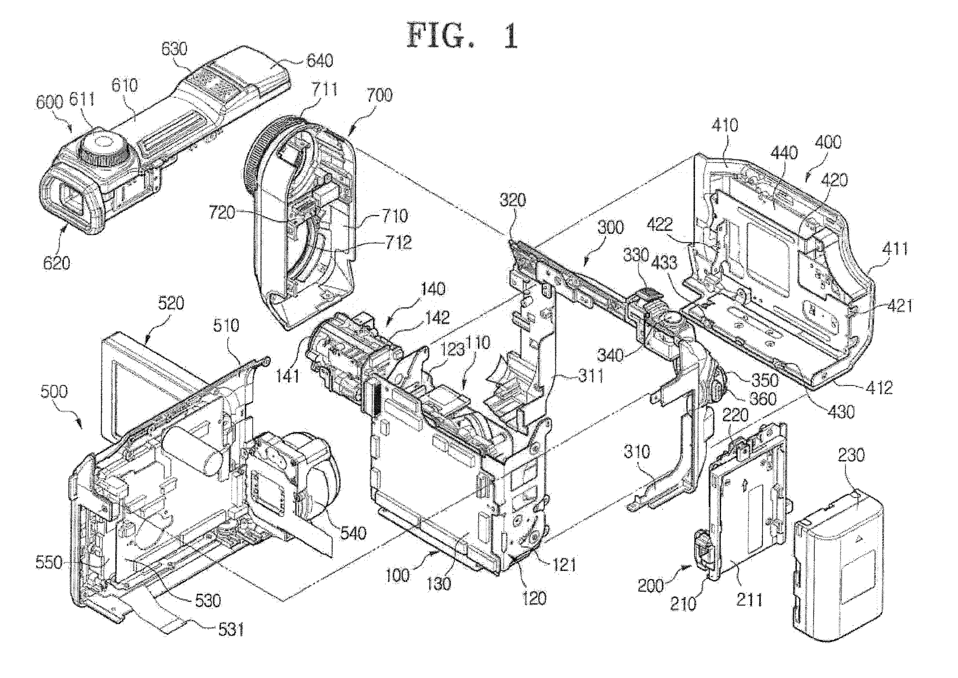

As shown in Figure 1, the image photographing apparatus of the invention includes a deck assembly 100, a rear assembly 200, a first exterior assembly 300, a deck cover assembly 400, a second exterior assembly 500, an upper assembly 600, and a front assembly 700.

The deck assembly 100 includes a deck unit 110, a deck housing 120, a main board 130, and a first camera unit 140.

The deck unit 110 is used for recording data including images on a magnetic tape and playing back the recorded data. More specifically, a head drum in the deck unit 110 records data on the magnetic tape and then plays back the recorded data. According to the structure of the deck unit 110, a sub-deck moving on the main deck loads and/or unloads the cassette tape. The structure of the deck unit 110 is known, so will not be detailed here.

The deck housing 120 surrounds the deck unit 110 for support, and includes a main frame 121 onto which the deck unit 110 is mounted. A door frame 123 is hinged to the upper portion of the main frame 121. The door frame 123 is hinged to the main frame 121 to either open or close. If the door frame 123 is open, the upper portion of the deck unit 110 is exposed when the cassette tape is inserted into or taken out of the deck unit 110. The door frame 123 is connected to the deck cover assembly 400.

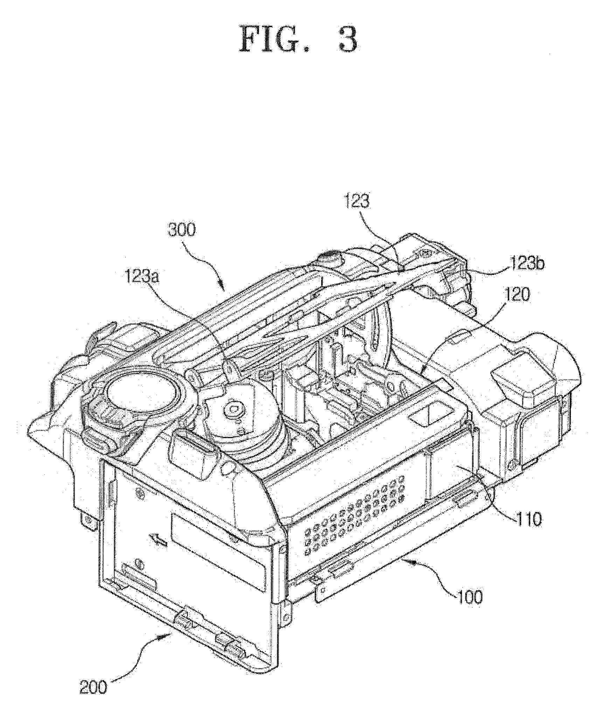

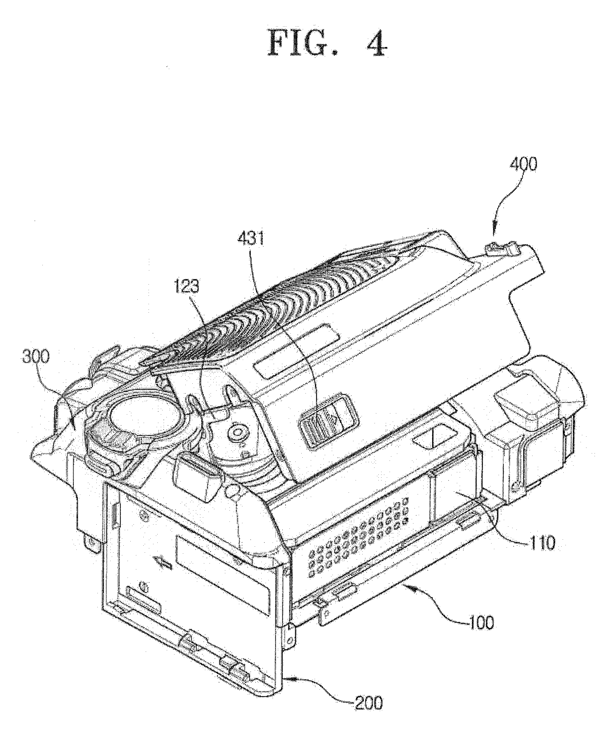

As shown in Figures 3 and 4, when the deck cover assembly 400 is opened, the door frame 123 is also opened. Consequently, the deck unit 110 is exposed, thereby allowing the user to insert the cassette tape or to take the cassette tape out of the deck unit. The deck housing 120 may be made of pressed metal.

The main board 130 is located opposite to the deck unit 110, with the main frame 121 being located therebetween. The main board 130 is connected to both the deck unit 120 and the first camera unit through a connector or flexible printed cable (FPC). This allows the main board 130 to communicate with the deck unit 120 and the first camera unit 140. Several other components may also be directly coupled to the main board 130 or through a signal cable.

The first camera unit 140 is fixed to the deck housing 120 and the main board 130 for support. The first camera unit 140 is preferably a digital video camera toprimarily capture moving images. This technical construction is also broadly used in camcorders. Also, an infrared filter may be disposed in the camera lens barrel 141 of the first camera unit 140 for photographing at night, for example. To activate and de-activate the infrared filter, a filter lever 142 is movably installed outside the camera lens barrel 141.

The rear assembly 200 is connected to the deck housing 120. Preferably, the rear assembly 200 is located near to the body of the photographer. More specifically, the rear assembly 200 is fixed to the main frame so that it is located on the side opposite the first camera unit 140. The rear assembly 200 includes a rear case 210 and a rear board 220 attached to the inside of the rear case 210. Also, a battery mounting portion is located on the outside of the rear case 210 which is adapted to receive a battery 230. The rear board 220 is electrically connected to the main board 130 through a signal cable.

The first exterior assembly 300 is connected to cover part of the deck assembly 100. More specifically, the first exterior assembly 300 covers part of the right side of the deck assembly 100. Also, the first exterior assembly 300 covers part of the frame of the rear assembly 200 that is first put on the deck assembly 100. The first exterior assembly 300 includes a first exterior case 310 (which is preferably a moulding), and an infrared filter operation unit 320 supported by the first exterior case 310. The first exterior case 310 has an opening 311 opposite the door frame 123 of the deck unit 110. The opening 311 is opened or closed using the deck cover assembly 400. The infrared filter operation unit 320 is movably installed in the first exterior case 310, and is coupled to the filter lever 142 in an interlocking manner. Also, the first exterior case 310 has a zoom knob 330 for adjusting the focal distance, a photo shutter 340 for photographing still images, and a mode selection switch 350 for selecting whether to photograph moving images or still images, as well as a recording button 360. The zoom knob 330 and the photo shutter 340 are preferably connected with each other as one module and are installed in the first exterior case whilst being exposed on the outside of the first exterior case 310. Moreover, the zoom knob 330, the photo shutter 340, the mode selection switch 350, and the recording button 360 are all preferably connected to one another by a signal cable (not shown) and are then coupled to the main board 130 using an integrated terminal. Alternatively, only part of the zoom knob 330, the photo shutter 340, the mode selection switch 350 and the recording button 360 are installed in the first exterior case 310, whereas the other parts may be installed in another assembly.

The deck cover assembly 400 includes a moulded cover case 410, a support frame 420 attached to the inside the cover case 410, and a locking and release unit 430 installed inside the cover case 410. The cover case 410 includes a side wall 411 having a shape corresponding to the opening 311 of the first exterior case 310, and a lower wall 412 bent at the bottom end of the side wall 411 but being long enough to encompass or cover the lower portion of the deck unit 110. The support frame 420 is made from metal and is connected to the door frame 123 of the deck housing 120. The locking and release unit 430 includes a sliding release knob 431 (refer to Figure 4) exposed on the outside of the lower wall 412, and a sliding hook 433 connected to the release knob 431. The hook 433 is elastically biased to one side by a spring (not shown).

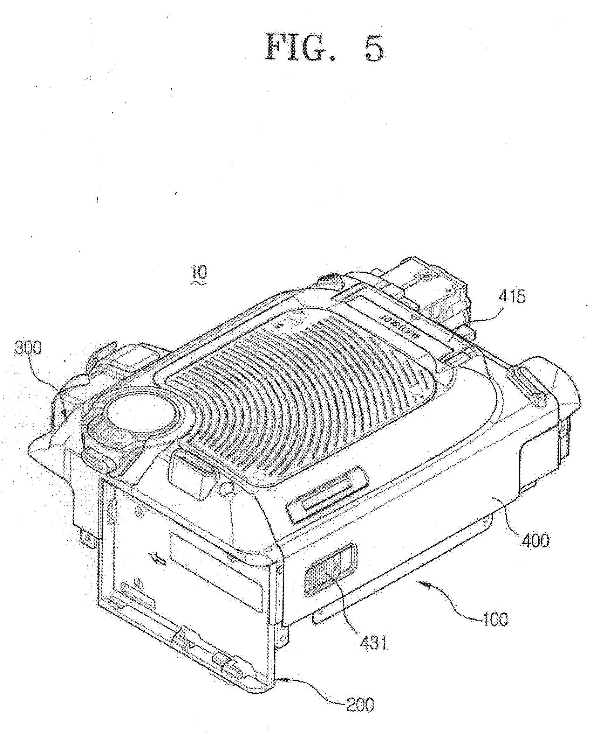

In addition, a recording medium mounting portion 415 (refer to Figure 5), where a recording medium such as a memory card is mounted, is installed on the outside of the cover case 410. Inside the cover case 410, and opposite to the recording medium mounting portion 415, is a circuit board 440 which is coupled to the recording medium. The deck cover assembly 400 is assembled after the deck assembly 100 and the first exterior case 300 are assembled. More specifically, to assemble the deck cover assembly 400, the door frame 123 of the deck housing 120 should be opened and the deck cover assembly 400 is put on the opened door frame 123, as shown in Figure 4. This is then connected to the support frame 420.

The second exterior assembly 500 includes a second exterior case 510, a first display unit 520 attached to the outside of the second exterior case 510, a sub-board 530, and a second camera unit 540.

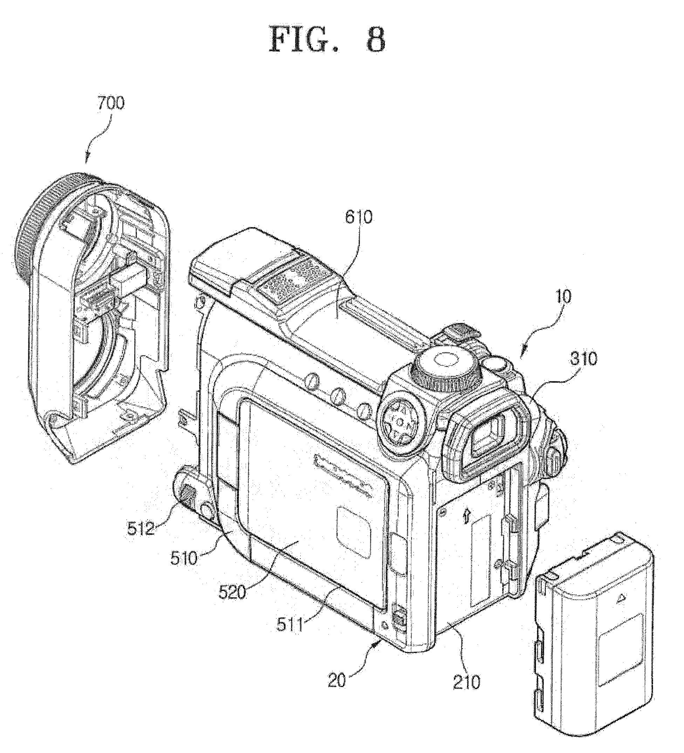

The second exterior case 510 covers the left side of the deck assembly 100, that is, one side of the main board 130. As shown in Figure 8, the second exterior case 510 is preferably moulded from plastic materials, and includes a display mounting portion 511 on its exterior. The display mounting portion 511 is preferably installed on the outside of the second exterior case 510, and the first display unit 520 is then placed on it. Also, a roll switch 512 for menu selection is located on the second exterior case 510. A speaker unit and a plurality of function keys (not shown) are installed on a cover 550 which is covered by the display mounting portion 511. Other function keys may be installed on the second exterior case 510.

Preferably, the second display unit 520 is an LCD panel, and is installed on the second exterior case 510 having dual axis rotation. The second display unit 520 displays images photographed by the first and second camera units 140 and 540 or displays images played back from the recording medium. The second display unit 520 is coupled to the sub board 530 through a cable.

The sub-board 530 is attached to the inside of the second exterior case 510. The sub-board 530 is coupled to the first display unit 520 and the second camera unit 540. When the first exterior assembly 500 is connected to the deck assembly 100, the sub-board 530 is coupled to the main board 130 through FPC 531. The roll switch 512, the speaker unit, and the function keys are also coupled to the sub-board 530.

The second camera unit 540 is a digital still camera to photograph still images. Therefore, the second camera unit 540 may include a CCD with a higher pixel density than the first camera unit 140 allowing high quality pictures to be captured. The second camera unit 540 is coupled to one end of the sub-board 530. In effect, when the second exterior assembly 500 and the deck assembly 100 are connected, the second camera unit 540 is attached to the bottom end of the sub board 530 locating it at the lower portion of the first camera unit 140.

The upper assembly 600 includes an upper case 610, a second display unit 620, a microphone 630, and a flash 640. The upper case 610 covers the upper portion of the deck assembly 100, and is preferably connected thereto before the second exterior case 510 is connected. The second display unit 620 is connected to one end of the upper case 610. Preferably, the second display unit 620 is a viewfinder. The microphone 620 and the flash 640 are installed on the upper case 610 for exposure to the outside. Because the first and second camera units 140 and 540 are located in parallel on the front of the photographing apparatus, the microphone 630 and the flash 640 are located on the upper portion of the apparatus, preferably on the upper case 610, to utilise space more effectively. Alternatively, the microphone 630 and the flash 640 may be installed on one of the first exterior assembly 300, the second exterior assembly 500, or the front assembly 700. The flash 640 pops in and out of the upper case 610. The second display unit 620, the microphone 630, and the flash 640 are connected to the sub-board 530.

Also, a function key module 611 is installed on the upper case 610 to execute the functions of the digital still camera used in the second camera unit 540. The function key module 611 is connected to the sub-board 530.

The front assembly 700 covers the front part of the apparatus where the first and second camera units 140 and 540 are located. The front assembly 700 includes a front case 710 and a sensor module 720 installed inside the front case 710. The front case 710 has first and second lens hoods 711 and 712, each being having opening that correspond to each camera unit 140 and 540. The lens hoods 711 and 712 are preferably vertically located above one another, and sometimes they are manufactured as separate parts and then are assembled later in the front case 710.

The sensor module 720 includes a remote control sensor installed on the board, a main strobe sensor, a supplementary strobe sensor, and an infrared LED. This sensor module 720 is connected to the sub-board 530 or the main board 130.

The following will now explain an assembly method of the photographing apparatus.

At first, seven assemblies 100, 200, 300, 400, 500, 600, and 700 are prepared, respectively. Each of the assemblies is assembled using different assembly processes, and then are connected together.

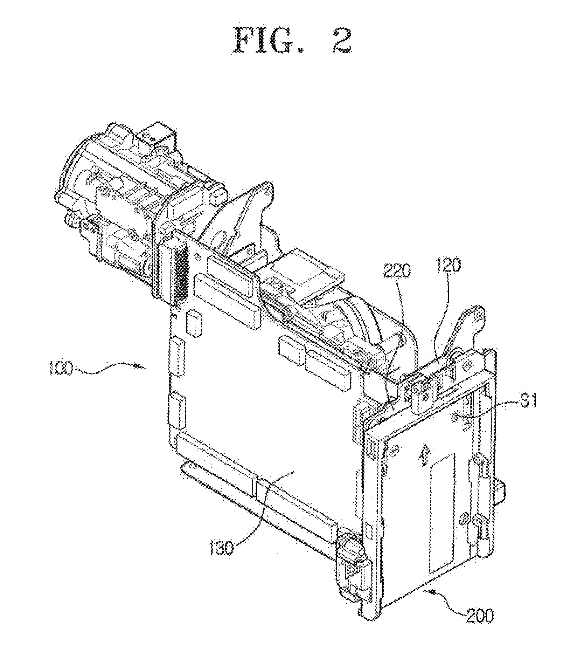

As shown in Figure 2, the rear assembly 200 is connected to the deck assembly 100. More specifically, the rear assembly 200 is fastened to the deck housing 120 of the deck assembly 100 using a screw S1. Then the rear board 220 of the rear assembly 200 and the main board 130 are connected using an FPC.

As shown in Figure 3, the first exterior assembly 300 is connected to the deck assembly 10 and the rear assembly 200, preferably by screws. The infrared filter operation unit 320 (refer to Figure 1) of the first exterior assembly 300 is connected to the infrared filter operation lever 142. The devices 330, 340, 350 and 360 installed in the first exterior assembly 300 are connected to the main board 130, respectively, preferably through an FPC.

The deck housing 120 is exposed to the right side through the opening 311 of the first exterior case 310. Then the door frame 123 of the deck housing 120 is opened, as shown in Figure 3.

While the door frame 123 is open, the deck cover assembly is put on the door frame 123, as shown in Figure 4. More specifically, the fastening portions 123a and 123b of the door frame 123 are connected to the fastening portions 421 and 422 of the support frame 420, respectively, preferably by screws. When the deck cover assembly 400 is closed following its assembly, as shown in Figure 5, a first module 10 is formed. This has four assemblies 100, 200, 300, and 400. The first module 10 is tested at this stage of the assembly process.

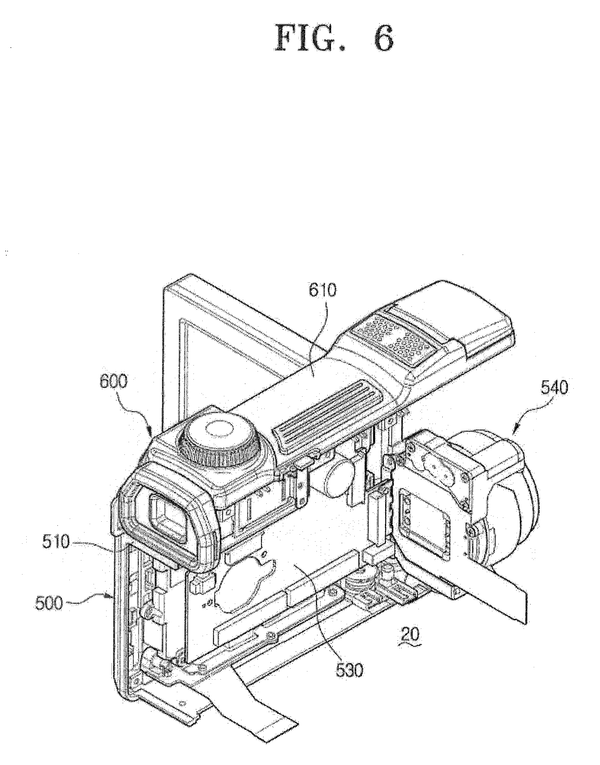

Next, as shown in Figure 6, the upper assembly 600 is connected to the second exterior assembly 500. In other words, the upper case 610 is screwed to the second exterior case 510. The microphone 630, the flash 640, and the display unit 620 of the upper assembly are connected to the sub-board 530, preferably through an FPC. This completes the assembly of a second module 20. The second module 20 is tested as well.

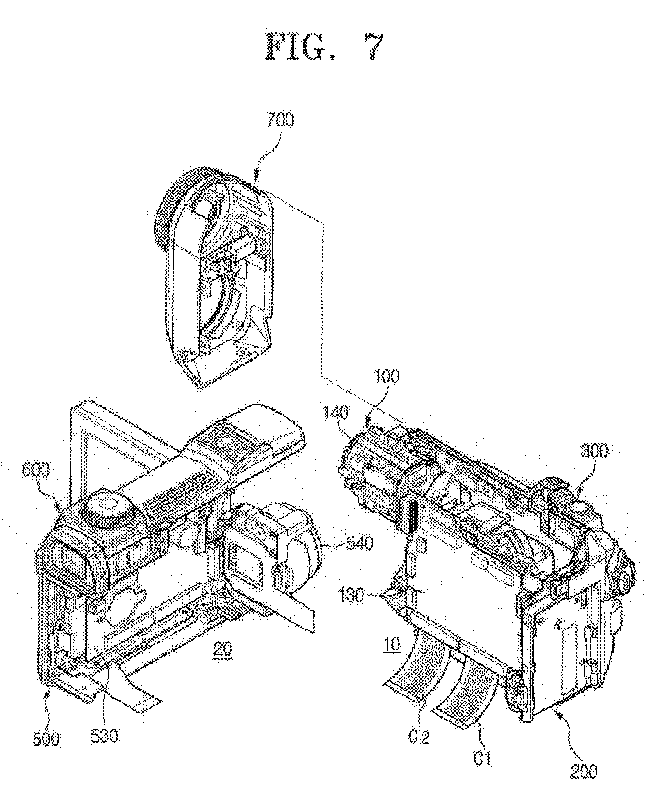

If the first and second modules 10, 20 pass the tests, they are connected to each other, as shown in Figure 7. The main board 130 and the sub-board 530 are connected to each other through circuit cables C1 and C2. Another circuit cable 531 of the second module 20 is also coupled to the main board 130. These two boards 130 and 530 are brought together so that the second camera unit 540 is located beneath the first camera unit 140. As shown in Figure 8, the first and second modules 10 and 20 are connected to each other in the shape of a photographing apparatus. The first and second exterior cases 310 and 510, the upper case 610, and the rear case 210 are connected to each other, preferably by screws.

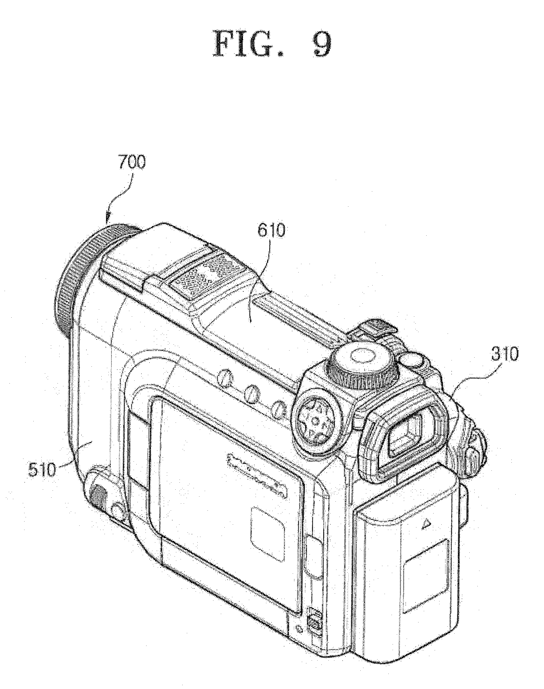

Referring to Figure 8, the front assembly 700 is attached to the front side of the apparatus of which first and second modules 10 and 20 are already assembled. Finally, as shown in Figure 9, the front assembly 700 is connected to each exterior case 310 and 510 and to the upper case 610, preferably by screws. Preferably, connecting the front assembly is the last step in assembling.

As described above, each part is first assembled in a unit module, and each unit module is assembled to each other in a designated sequence. The assembly method thereof is simple enough that anyone can easily finish the assembling process.

Since each unit module is assembled with each other following the designated sequence that is set in consideration of the electrical connections between the main board and the respective parts, the assembly may be done successfully and efficiently.

Also, the photographing apparatus of the invention is separated into seven unit modules, each being easily replaced. Therefore, customers are provided with excellent warranty services for the product.

The DVC module (the first module) and the DSC module (the second module), each being independently assembled, may go through a designated test, respectively, before they are assembled to each other. In this manner, the number of defective products may be reduced and productivity increased.

## Claims

1. A method of manufacturing a camera system having a plurality of image capture units (140,540), the camera system comprising a recording media deck (110), a first and second image capture unit (140,540), a main circuit board (130) and a housing (200,300,400,500,600), the method being **characterised by** the main circuit board (130) and the first image capture unit (140) being fixed to the deck (110) to form a core unit (100) before the core unit (100) is enclosed in the housing (200,300,400,500,600).

2. A camera system comprising a deck (110), a first and second image capture unit (140,540), a main circuit board (130) and a housing (200,300,400,500,600), the camera system being **characterised in that** the main circuit board (130), the first image capture unit (140) and the deck (110) are fixed together as a core unit (100) whose unity is independent of the housing (200,300,400,500,600).

3. An image photographing apparatus, comprising:
a deck assembly having a deck unit, a main board, and a first camera unit;
a first exterior assembly having an opening corresponding to the deck unit, and being connected to a first side of the deck assembly;
a deck cover assembly connected to the deck unit to open and close the opening of the first exterior assembly;
a second exterior assembly having a second camera unit and a first display unit connected to the first exterior assembly to encompass a second side of the deck assembly;
a rear assembly connected to the deck assembly to cover a rear side of the deck assembly;
an upper assembly having a second display unit connected to second exterior assembly, the upper assembly covering an upper portion of the deck assembly; and
a front assembly connected to the first and second exterior assemblies and to the upper assembly, the front assembly covering a front side of the deck assembly.

4. The apparatus according to claim 3, wherein
a deck housing is connected between the deck unit and the main board to support the deck unit and the main board.

5. The apparatus according to claim 3, wherein
a main frame encompasses the deck unit; and
a door frame is hinged to the main frame to open and close the deck unit.

6. The apparatus according to claim 5, wherein
the deck cover assembly is connected to the door frame.

7. The apparatus according to claim 6, wherein
a support frame made of metallic materials is connected to the door frame;
a cover case is connected to the support frame to cover the opening in the first exterior assembly; and
a locking and release unit is disposed in the cover case to lock and release the deck housing.

8. The apparatus according to claim 7, wherein
the cover case has a memory stick mounting portion.

9. The apparatus according to claim 3, wherein
a first exterior case is connected to one side of the deck assembly and to the rear assembly; and
an infrared filter operation unit is disposed on the first exterior case to turn on and off an infrared filter of the first camera unit.

10. The apparatus according to claim 9, wherein
the first exterior case has at least two of the group consisting of a zoom knob, a photo shutter, a mode selection switch, and a recording button.

11. The apparatus according to claim 3, wherein
a rear case is connected to the deck assembly and has a battery mounting portion; and
a rear board is disposed in the rear case and is electrically coupled to the main board.

12. The apparatus according to claim 3, wherein
a second exterior case has a second display unit mounting portion; and
a sub-board is disposed in the second exterior case on an opposite side from the main board when the second exterior assembly is connected to the deck assembly.

13. The apparatus according to claim 12, wherein
the second camera unit is disposed on one side of the deck assembly to position the first and second camera units substantially vertically when the first exterior assembly and the deck assembly are connected.

14. The apparatus according to claim 12, wherein
the sub-board is disposed substantially parallel to the main board.

15. The apparatus according to claim 12, wherein
the sub-board is electrically coupled to the second camera unit and the first display unit and to the main board when the sub-board is connected to the deck assembly.

16. The apparatus according to claim 12, wherein
a speaker unit is electrically coupled to the sub-board;
the second exterior case has a plurality of ports adapted to receive external equipment; and
the second exterior case has a plurality of function keys to enable a user to select a menu displayed on the first display unit.

17. The apparatus according to claim 3, wherein
a first case has a first and a second lens hood, each being opened in correspondence with the first and second camera units, respectively; and
a sensor module is disposed in the front case, and has a remote control sensor and a strobe sensor.

18. The apparatus according to claim 3, wherein
an upper case covers the first camera unit and the upper portion of the deck assembly and is connected to the second display unit; and
a microphone is connected to the upper case.

19. The apparatus according to claim 18, wherein
the upper assembly has a flash movably installed on the upper case to move in and out of the upper case.

20. The apparatus according to claim 3, wherein
the first camera unit is a digital video camera module.

21. The apparatus according to claim 3, wherein
the second camera unit is a digital still camera module.

22. A method of assembling an image photographing apparatus, comprising the steps of:
preparing a first module by connecting a deck assembly, a rear assembly, a first exterior assembly, and a deck cover assembly together, the deck assembly having a deck unit, a main board and a first camera unit, the first exterior assembly having an opening corresponding to the deck unit and encompassing a first side of the deck assembly, a rear assembly covering a rear side of the deck assembly, and the deck cover assembly being adapted to open and close the first exterior assembly;
preparing a second module by connecting the second exterior assembly to an upper assembly, the second exterior assembly having a second camera unit and a first display unit to encompassing a second side of the deck assembly, and the upper assembly having a second display unit and covering an upper portion of the deck assembly; and
connecting the first module and the second module dispose the first and second camera units substantially vertically; and
connecting the front assembly to the first and second modules, the front assembly covering a front side of the deck assembly.

23. The method according to claim 22, further comprising
connecting the rear assembly to the deck assembly;
connecting the first exterior assembly on the first side of the rear assembly and the deck assembly; and
connecting the deck cover assembly to the deck assembly to form the first module.

24. The method according to claim 22, further comprising
electrically coupling a sub-board to the first display unit and the second camera unit, and
electrically coupling the sub-board and the main board.
